# EUROPEAN PATENT SPECIFICATION

(11) **EP 0 477 366 B1**
(45) Date of publication and mention of the grant of the patent: **27.12.1996**
(21) Application number: 90902819.3
(22) Date of filing: 09.02.1990
(51) Int. Cl.: G05B 19/42

(54) **METHOD OF SETTING TEACHING DATA IN A VISUAL SENSOR SYSTEM**
VERFAHREN ZUM EINGEBEN VON LERNDATEN IN EINEM VISUELL GEFÜHRTEN SYSTEM
PROCEDE DE REGLAGE DE DONNEES D'APPRENTISSAGE DANS UN SYSTEME DE DETECTION VISUELLE

(30) Priority: 10.02.1989 JP 129735/89
(43) Date of publication of application: 01.04.1992
(73) Proprietor: FANUC LTD., Minamitsuru-gun, Yamanashi 401-05 (JP)
(72) Inventor: WATANABE, A. Room 7-207 FANUC Manshonharimomi, Yamanashi 4 (JP); ARIMATSU, Taro FANUC Dai-3 Vira-karamatsu, Yamanashi 401-05 (JP)
(74) Representative: Billington, Lawrence Emlyn
(86) International application number: JP9000165
(87) International publication number: WO9009627

(56) References cited:
- EP-A- 0 178 329
- JP-A-58 141 864
- JP-A-62 182 809
- JP-A-62 182 810
- PROC. OF THE 8TH INTERN. CONF. ON PATTERN RECOGNITION 27-31 October, 1986, Paris, FR, pp. 795-797; Claus-E. LIEDTKE and Manfred ENDER: "A Knowledge-based Vision System For The Automated Adaptation to New Scene Contents'

## Description

The present invention relates to a taught data setting method in a visual sensor system, capable of automatically setting optimum taught data.

In various kinds of machines such as industrial robots, it is conventionally known to control the operating position and orientation of a machine operating section, e.g., a robot hand, in dependence on the position of a work object, which is detected by a visual sensor system, to thereby effect required work. Typically, in this case, an image of a single sample object is analyzed to prepare taught data (model) for image processing, which is to be supplied beforehand to a visual sensor. Then, to recognize the position of the work object, the taught data is compared with an image (scene) of the work object photographed by a camera of the visual sensor system. Conventionally, a manual modification of the taught data is carried out in a trial-and-error manner, so long as instability is found in the work object recognition based on the taught data. This taught data modification requires skill and labor.

The object of the present invention is to provide a taught data setting method in a visual sensor system, which is capable of automatically setting optimum taught data.

According to the present invention there is provided a taught data setting method in a visual sensor system which is employed to control the operating position and orientation of a machine operating section in dependence on the position of an object detected by the visual sensor system, the taught data setting method comprising, prior to operation of the machine operating section: (a) storing a plurality of sample images of such objects, these objects being sufficiently similar to one another as to be definable by common items of taught data; (b) determining formal setting values of said taught data for one of said plurality of sample images; (c) detecting and setting feature data specifying a position of each of said plurality of sample images, said feature data being obtained from each respective sample image by using the taught data thereof; and (d) employing said set feature data of each of said plurality of sample images in a process of automatically determining and setting optimum values of said taught data, these optimum values being for use in a subsequent operation of the machine operating section under the control of the visual sensor system when an actual working object is detected by the visual sensor system; said automatic optimum value determining process comprising determining, as optimum value of each item of taught data, that value thereof which minimizes the error between the position-specifying feature data corresponding to the optimum value, and the position-specifying feature data of each of said plurality of sample images, each optimum value being determined by a process involving changing at least one of the original formal setting values.

As mentioned above, according to the present invention, the feature data of each sample image specifying the position of each of the plurality of sample images is detected and set by using the formal setting values determined on the basis of a single sample image, and the values of the taught data enough to minimize the errors between the feature data of the respective sample images, detected while changing the at least one formal setting value, and the corresponding ones of the aforesaid set feature data are automatically set as the optimum values of taught data. Accordingly, the optimum taught data can be set rapidly, without the need of intervention of a skilled operator.

### Brief Description of the Drawings

Fig. 1 is a schematic view showing part of a visual sensor system for embodying a taught data setting method according to an embodiment of the present invention;
Fig. 2 is a flowchart of an automatic parameter setting process executed by an image central processing unit of Fig. 1;
Fig. 3 is a flowchart of a first parameter adjusting process;
Fig. 4 is a flowchart of a fifth parameter adjusting process; and
Fig. 5 is a view showing a region within which a formal setting value of the first parameter is changed, and intervals at which the formal setting value is changed.

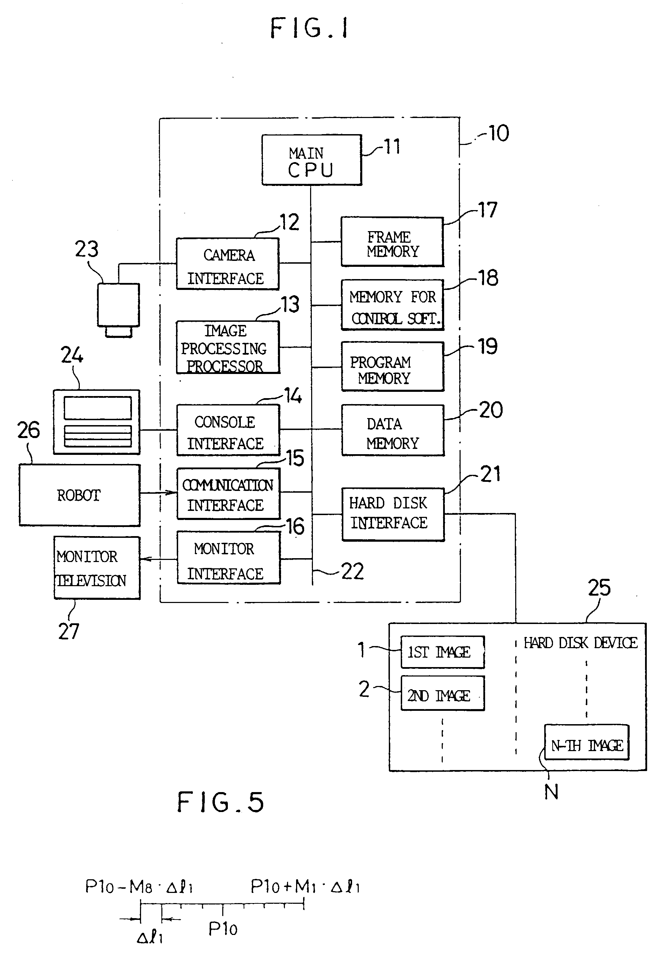

Referring to Fig. 1, a visual sensor system to which a taught data setting method according to an embodiment of the present invention is applied comprises an image central processing device 10. This processing device 10 comprises a main central processing unit (hereinafter referred to as main CPU) 11, a camera interface 12, an image processing processor 13, a console interface 14, a communication interface 15, a monitor interface 16, and a frame memory 17. Further, the device 10 comprises a memory 18, comprised of a ROM, for storage of control software, a program memory 19 comprised of a RAM, and a hard disk interface 21. These elements 12 to 21 are connected to the main CPU 11 through busses 22.

More specifically, a camera 23 for photographing objects, e.g., components of various kinds, is connected to the camera interface 12. An image from the camera 23 is supplied to the camera interface 12 in which the image is subjected to an A/D conversion, to be converted into a gray scale image consisting of 256 X 256 picture elements each of which is represented by 1 byte, and the gray scale image is stored in the frame memory 17. Whereupon, the gray scale image is subjected to image processing in the image processing processor 13 for identification of the object and for detection of the position and orientation of the object. The resultant taught data and the like are stored in the data memory 20. A hard disk device 25 connected to the hard disk interface 21 comprises a hard disk whose capacity is 20 megabytes for storage of approximately 320 images.

Connected to the console interface 14 is a console 24 which comprises various kinds of keys, including numeric keys, for input of various commands and for input, edit, registration, execution, etc., of an application program, and a liquid crystal display for displaying various work menus, a program list, etc. Further, a machine having an operating section, e.g., a robot 26, on which the visual sensor system is mounted, and a monitor television 27 for displaying the image photographed by the camera 23 are connected to the communication interface 15 and the monitor interface 16, respectively. The control software memory 18 is arranged to store a program for visual sensor system control, and the program memory 19 is arranged to store a user program which is prepared by operator's operations in accordance with a menus displayed on the console 24.

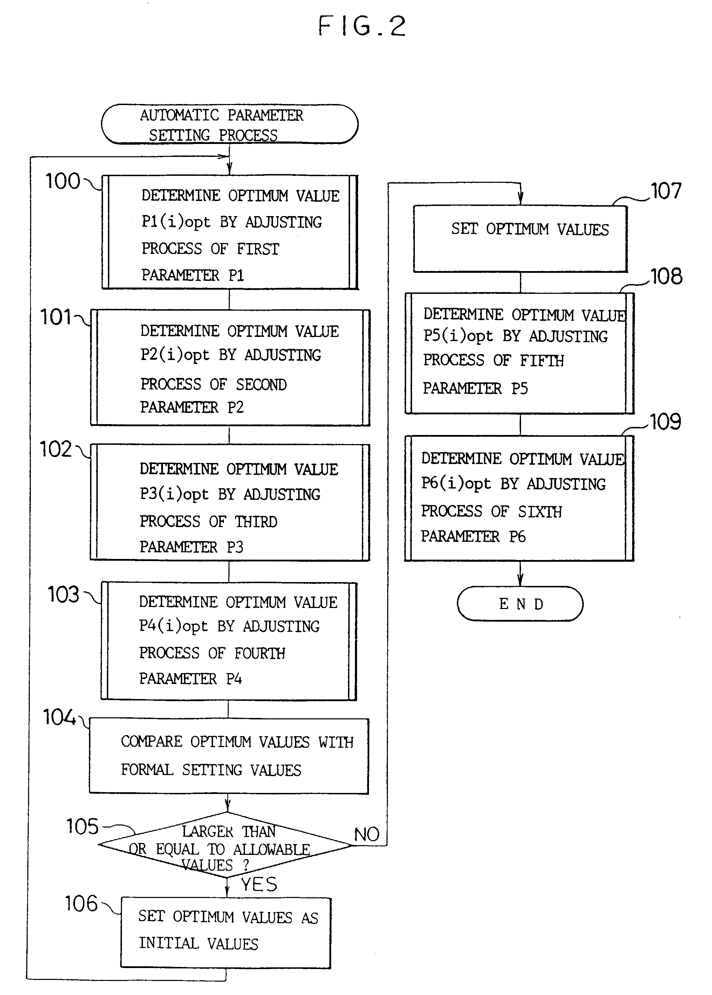

With reference to Figs. 2 to 5, an automatic parameter setting process of the visual sensor system will be explained.

At first, a required number of sample objects, e.g., N sample objects (not shown) are photographed in sequence by the camera 23, preferably, at the same photograph position. For instance, these samples are arbitrarily extracted from a large number of circular objects of the same kind. Preferably, the samples have variations in their sizes, shapes, etc. Then, the gray scale images (hereinafter referred to as sample images 1 to N) of the samples are stored in the frame memory 17. Thereafter, the sample images 1 to N are sequentially transferred to and stored in the hard disk of the hard disk device 25.

Whereupon, in response to an operator's operation of the console 24, an arbitrary one of the sample images 1 to N is read out from the hard disk, to be stored in the frame memory 17. This single sample image is subjected to image processing in the image processing processor 13, so that values P10 to P60 of first to sixth parameters P1 to P6 for image processing are detected from the single sample image, as taught data with respect to the circular object. The detected values P10 to P60 are stored in the data memory 20, as formal setting values of the taught data.

Here, the first to fourth parameters P1 to P4 are the diameter, circumference, area, deformation degree (area/square of circumference) of the circle, respectively. The fifth and sixth parameters P5 and P6 are a type of a smoother filter for improving flicker developed on the screen, and a type of an emphasizing filter for improving obscurity of the screen image, respectively.

The sample images 1 to N, which are sequentially transferred from the hard disk to the frame memory 17, are sequentially subjected to image processing with the use of the formal setting values P10 to P60, and feature data (in the present embodiment, the center positions C10 to CN0 of the images) specifying positions of the respective sample images are detected in sequence. Upon detection of the image center positions, the operator manually corrects a dislocation of the image center position, where required, with reference to the sample image concerned which is displayed on the monitor television 27, and manually sets the corrected center position of the image. The thus detected and set image center positions C10 to CN0 of the sample images 1 to N are stored in the data memory 20.

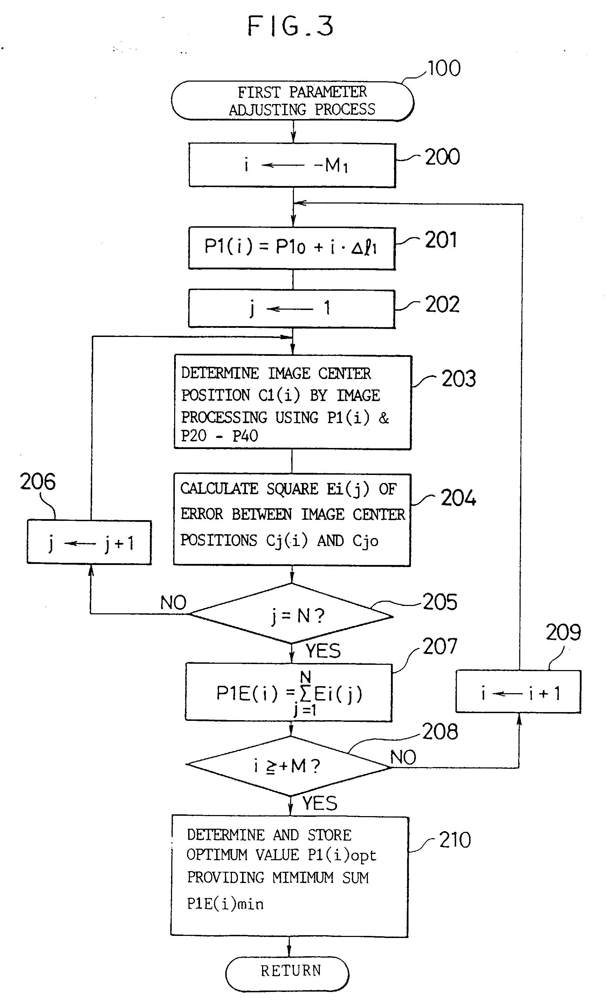

When an automatic parameter setting command is input through the console 24, the main CPU 11 executes a first parameter adjusting process of Fig. 3, which corresponds to the step 100 of a main routine shown in Fig. 2.

At first, the CPU 11 sets a first index i to the minimum value of -M1 (step 200 of Fig. 3), and renews the initial value (formal setting value) P10 of the first parameter to a value of P1(-M1), generally, P1(i), which value is obtained by adding the product of the index i (= -M1) and an interval Δl1 of change to the value P10 (step 201). Then, the CPU sets a second index j to a value of "1" (step 202), and causes the first sample image, corresponding to the index j (=1), to be transferred from the hard disk to the frame memory 17. Further, the CPU performs image processing of the first image by the use of the first parameter value P(-M1) and the formal setting values P20 to P40 of the second to fourth parameters, to thereby detect the image center position C1(-M1). Generally, by using the value P1(i), the center position Cj(i) of the j-th image is detected (step 203). Then, the CPU calculates the square E1(1), generally, Ei(j), of the error between the image center position C1(-M1) and a corresponding image center position Cj0 set in the data memory 20 (step 204).

Meanwhile, the value Ei(j) is calculated by deriving the sum of the square of the error between X-axis positions of the image centers Cj(i) and Cjo in the sensor coordinate system and the square of the error between Y-axis positions of these centers.

Further, at step 205 which follows step 204, the CPU determines whether the index j is equal to the total number N of the sample images. Here, the determination result is negative. Hence, at step 206, the CPU renews the index j (=1) to a value of j+1 (= 2), and then executes the aforementioned steps 203 to 205 again, to thereby calculate a value of Ei(2).

Subsequently, when it is determined at step 205 that the index j equals the total image number N, and hence the squares of the respective errors between the detected image center positions C1(i), C2(i), ---, CN(i) and the corresponding image center positions C10 to CN0 set in the data memory 20 have been calculated for all of the sample images 1 to N with respect to the index i (=-M1), the CPU 11 determines the total sum P1E(-M1) of these calculated values, generally, P1E(i), and causes the program memory 19 to store the total sum (step 207). Further, at step 208 following step 207, the CPU determines whether the index i is equal to or larger than its maximum value of +M1. Here, since the determination result is negative, the CPU renews the index i (= -M1) to a value of i+1 (= -M1+1) at step 209, and then executes the steps 201 to 208 again, thereby calculating a value of P1E(-M1+1).

Subsequently, when it is determined at step 208 that the index i is equal to or larger than the maximum value +M1, i.e., when it is determined that values of P1E(-M1), P1E(-M1+1), ---, P1E(+M1), each representing a corresponding one of the total sums of the squares of the errors between the detected image center positions of the sample images 1 to N and the set image center positions thereof, have been calculated with regard to respective values of the first parameter P1, which changes at intervals of Δl1 within a region (Fig. 5) from P10-M1·Δl1 to P10+M1·Δl1 while the index i is changed from -M1 to +M1, the CPU 11 determines the minimum value P1E(i)min of these calculated values. Then, the CPU finds that value of the first parameter P1 which provides the aforesaid minimum value, and causes the same to be stored in the program memory 19, as the optimum value Pl(i)opt of the first parameter (step 210), whereby the sub-routine process of Fig. 3 is finished. Then, step 100 of the main-routine of Fig. 2 is entered.

Processing procedures in step 101 for determining an optimum value of the second parameter is substantially the same as those in Fig. 3. Namely, the first parameter is fixed to the optimum value of Pl(i)opt, while the third and fourth parameters are fixed to the formal setting values P30 and P40, respectively. Then, values of P2E(-M2), P2E(-M2+1), ---, P2E(+M2) are determined, each indicating the total sum of the squares of the errors between detected center positions and the set center positions C10 to CN0 of the respective sample images, while changing a value of the second parameter P2 at interval A12, which is the same as or different from the aforesaid interval Δl1, within a region P20-M2A12 - P20+M2Δl2 (not shown), which is the same as or different from the the aforesaid region P10-M1Δl1-P10+M1Δl1. Further, the optimum value P2(i)opt of the second parameter which provides the minimum value P2E(i)min of these calculated values is determined and stored.

At step 102 following step 101, the third parameter is changed, while the first, second and fourth parameters are fixed to the optimum values Pl(i) opt, P2(i)opt and the formal setting value P40, respectively. Then, the CPU determines an optimum value P3(i)opt of the third parameter which provides the minimum value of the total sums of the squares of the errors between image center positions which are respectively determined under the above-mentioned conditions. At step 103, an optimum value P4 of the fourth parameter is determined, with the first to third parameters respectively fixed to the optimum values P1(i)opt to P3(i)opt.

Then, the CPU 11 compares each of the optimum values P1(i)opt to P4(i)opt of the first to fourth parameters with a corresponding one of the formal setting values P10 to P40 (step 104), and determines whether the error between each of the optimum values and an associated one of the formal setting values is equal to or larger than an allowable value (step 105). If any one of the errors is equal to or larger than the allowable value, the optimum values are respectively set as the initial values (step 106), and executes steps 100 to 106 again. On the other hand, if each error is less than the allowable value, the optimum values are substituted for the formal setting values in the data memory 20, respectively (step 107).

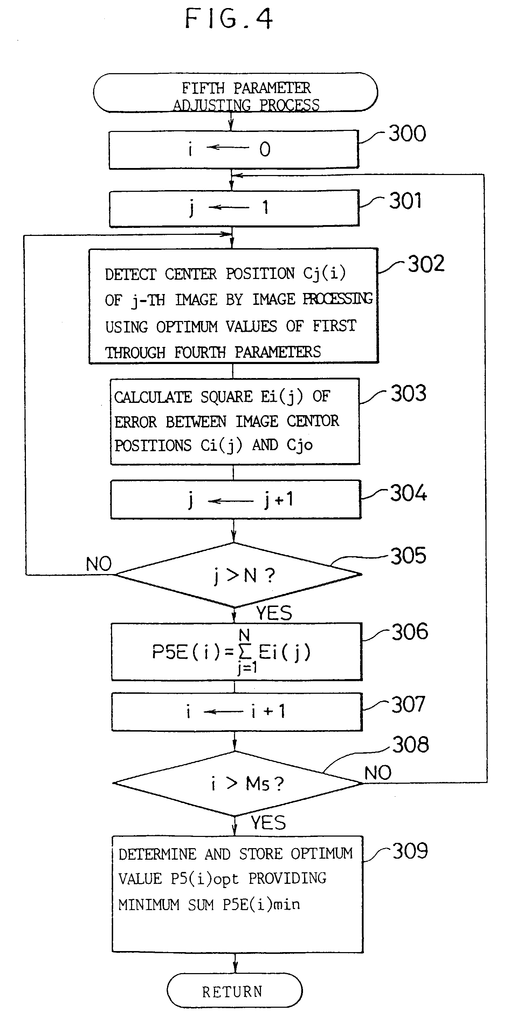

Next, adjustment processing for the fifth parameter shown in Fig. 4 and corresponding to step 108 is executed. At first, the CPU 11 sets the first and second indexes i, j to values of "0" and "1", respectively (steps 300, 301), and causes the first sample image 1, corresponding to the index j (= 1), to be transferred from the hard disk to the frame memory 17. Further, the CPU generally performs pre-processing for the j-th image stored in the frame memory 17, by using the smoother filter of that kind which is represented by a value P5(i) of the fifth parameter corresponding to the index i. Here, since the fifth parameter assumes a value of P5(0) indicating that no smoother filter is required, no pre-processing is performed. The first sample image is then subjected to image processing which utilizes the optimum values of the first to fourth parameters, generally after completion of the pre-processing by the smoother filter, so as to detect the center position C1(0) Of the first sample image, generally, the center position Cj(i) of the j-th image (step 302).

At the subsequent step 303 corresponding to step 204 of Fig. 3, the CPU derives the square E0(1) of the error between a detected center position C1(0) and the set center position C10, generally, Ei(j), and renews a value of the index j by adding "1" thereto (step 304), and further determines whether the index j is larger than the total number N of the sample images (step 305). Here, since j=2 or the determination result at step 305 is negative, the CPU executes steps 302 to 305 again, to derive a value of E0(2).

Subsequently, when it is determined at step 305 that the index j is larger than the total image number N, or determined that calculation of values E0(1), E0(2), ---, E0(N) for all of the sample images 1 to N is completed, the CPU 11 calculates the sum P5E(0) of these calculated values, generally, the sum P5E(i), and causes the program 19 to store the calculated sum (step 306). Then, the CPU renews a value of the index i by adding "1" thereto (step 307), and determines whether the index value is larger than the total number M5 of types of the smoother filter (step 308). Here, since the value of the index i is equal to "1" and hence the determination result at step 308 is negative, the CPU executes steps 301 to 308 again, to calculate and store the sum P5E(1) for a case where a first smoother filter is employed.

Thereafter, when it is determined at step 308 that the value of the index i is larger than the total smoother filter number M5, and hence the calculation of the sums P5E(0), P5E(1), ---, P5E(M5) for a case where all the smoother filters are employed is completed, the CPU 11 determines the minimum value P5E(i)min of these calculated values, and causes the data memory 20 to store an optimum value P5(i)opt of the fifth parameter, which value corresponds to that index value providing the aforementioned minimum value and which indicates the kind of an optimum smoother filter (step 309), whereby the processing of Fig. 4 is completed and step 109 of the main routine is entered.

Processing procedures in step 109 for adjustment processing of the sixth parameter are substantially the same as those in Fig. 2, except in that a total number M6 (not shown) of kinds of the emphasize filter, which is the same as or different from the total number M5 of the smoother filter types, is utilized in place of the value M5.

As explained above, although the operator's operation is partially intervened in a series of steps of storing many sample images, determining the formal setting values P10 to P60 of the taught data on the basis of one of the sample images, and setting the center positions of the sample images, the later processing is automatically carried out. As a result, optimum taught data can be rapidly determined, without the need of the intervention of a skilled operator. Moreover, since the optimum taught data is determined on the basis of many sample images having variations in their shape, size, etc., it is possible to suppress occurrences of erroneous detection and failure of detection when a machine to which the method of the present invention is applied is actually operated in accordance with the taught data.

The present invention is not limited to the foregoing embodiment, and may be modified in various ways.

For example, the embodiment includes steps 104 to 106 to restart the parameter adjustment process using the optimum values of the first to fourth parameters as the initial values thereof when any one of the errors between the optimum values and the formal setting values of the first to fourth parameters is equal to or larger than the allowable value. However, these steps may be omitted if the stability in detecting the object is attained by performing the parameter adjustment once.

In the embodiment, an external memory for sample image storage is comprised of the hard disk. Alternatively, other kinds of memories such as a floppy disk may be employed.

## Claims

1. A taught data setting method in a visual sensor system which is employed to control the operating position and orientation of a machine operating section (26) in dependence on the position of an object detected by the visual sensor system, the taught data setting method comprising, prior to operation of the machine operating section (26):
(a) storing a plurality of sample images (1 to N) of such objects, these objects being sufficiently similar to one another as to be definable by common items of taught data (P1 to P6);
(b) determining formal setting values (P10 to P60) of said taught data (P1 to P6) for one (1) of said plurality of sample images (1 to N);
(c) detecting and setting feature data (C1 to CN) specifying a position of each of said plurality of sample images (1 to N), said feature data (C1 to CN) being obtained from each respective sample image (1 to N) by using the taught data (P1 to P6) thereof; and
(d) employing said set feature data (C1 to CN) of each of said plurality of sample images (1 to N) in a process of automatically determining and setting optimum values (P1(i)opt to P6(i)opt) of said taught data (P1 to P6), these optimum values being for use in a subsequent operation of the machine operating section (26) under the control of the visual sensor system when an actual working object is detected by the visual sensor system; said automatic optimum value determining process comprising determining, as optimum value (P1(i)opt to P6(i)opt) of each item of taught data (P1 to P6), that value thereof which minimizes the error between the position-specifying feature data (C) corresponding to the optimum value, and the position-specifying feature data (C1 to CN) of each of said plurality of sample images (1 to N), each optimum value (P1(i)opt to P6(i)opt) being determined by a process involving changing at least one of the original formal setting values (P10 to P60).

2. A taught data setting method in a visual sensor system according to claim 1, wherein said plurality of sample images employed in said step (a) are taken from numerous objects and have variations in at least one of shape and size.

3. A taught data setting method in a visual sensor system according to claim 1 or 2, wherein optimum values of said taught data enough to minimize the sum of the errors are set in said step (d).

4. A taught data setting method in a visual sensor system according to any preceding claim, wherein at least one of the formal setting values is changed in said step (d) at a predetermined interval within a predetermined range including the at least one formal setting value.

5. A taught data setting method in a visual sensor system according to claim 1,
wherein said taught data is comprised of a plurality of parameters for image processing;
wherein respective formal setting values of said plurality of image setting parameters are determined in said step (b);
wherein the feature data of said plurality of sample images is detected in said step (d) while each of said plurality of image processing parameters is changed and the other image processing parameters are kept fixed at its formal setting value or its optimum value; and
wherein a value of each of said image processing parameter enough to minimize said error is automatically set, as an optimum value of said each parameter, in said step (d).

6. A taught data setting method in a visual sensor system according to claim 5, wherein an optimum value of each of said image processing parameters enough to minimize the sum of the errors is set in said step (d).

7. A taught data setting method in a visual sensor system according to claim 5 or 6, wherein each of said image processing parameters is changed in said step (d) at a predetermined interval within a predetermined range including the formal setting value of said each parameter.

## Patentansprüche

1. Lerndaten-Einstellverfahren in einem visuell geführten Sensorsystem, das benutzt wird, um die Arbeitsposition und die Orientierung eines Maschinenarbeitsabschnitts (26) in Abhängigkeit von der Position eines Objekts zu steuern, die mittels des visuell geführten Sensorsystems erfaßt ist, wobei das Lerndaten-Einstellverfahren vor dem Betrieb des Maschinenarbeitsabschnitts (26) Schritte enthält zum
(a) Speichern einer Vielzahl von Musterbildern (1 bis N) solcher Objekte, wobei diese Objekte einander hinreichend ähnlich sind, so daß sie mittels gemeinsamer Datenwörter aus Lerndaten (P1 bis P6) definierbar sind,
(b) Bestimmen von gültigen Einstellwerten (P10 bis P60) der Lerndaten (P1 bis P6) für eines (1) der Vielzahl von Musterbildern (1 bis N),
(c) Erfassen und Einstellen von Merkmalsdaten (C1 bis CN), welche eine Position jedes der Vielzahl von Musterbildern (1 bis N) genau angeben, wobei die Merkmalsdaten (C1 bis CN) aus jedem jeweiligen Musterbild (1 bis N) durch Benutzen der Lerndaten (P1 bis P6) derselben gewonnen werden, und
(d) Benutzen der eingestellten Merkmalsdaten (C1 bis CN) jedes der Vielzahl von Musterbildern (1 bis N) in einem Prozeß zum selbsttätigen Bestimmen und Einstellen von optimalen Werten (P1(i)opt bis P6(i)opt) der Lerndaten (P1 bis P6), wobei diese optimalen Werte bestimmt sind zur Benutzung in einem nachfolgenden Betrieb des Maschinenarbeitsabschnitts (26) unter Steuerung durch das visuell geführte Sensorsystem, wenn ein tatsächliches Bearbeitungsobjekt mittels des visuell geführten Sensorsystems erfaßt ist, wobei der Prozeß zum selbsttätigen Bestimmen von optimalen Werten das Bestimmen als optimalen Wert (P1(i)opt bis P6(i)opt) jedes Datenworts von Lerndaten (P1 bis P6) desjenigen Werts davon umfaßt, der die Abweichung zwischen den die Position genau angebenden Merkmalsdaten (C), welche dem optimalen Wert entsprechen, und den die Position genau angebenden Merkmalsdaten (C1 bis CN) jedes der Vielzahl von Musterbildern (1 bis N) minimiert, wobei jeder optimale Wert (P1(i)opt bis P6(i)opt) mittels eines Prozesses bestimmt wird, der das Ändern zumindest eines der ursprünglichen gültigen Einstellwerte (P10 bis P60) einschließt.

2. Lerndaten-Einstellverfahren in einem visuell geführten Sensorsystem nach Anspruch 1, bei dem die Vielzahl von Musterbildern, die in Schritt (a) benutzt werden, einer großen Anzahl von Objekten entnommen werden und in zumindest der Form oder der Größe Abweichungen aufweisen.

3. Lerndaten-Einstellverfahren in einem visuell geführten Sensorsystem nach Anspruch 1 oder 2, bei dem optimale Werte der Lerndaten, die ausreichen, um die Summe der Abweichungen zu minimieren, in Schritt (d) eingestellt werden.

4. Lerndaten-Einstellverfahren in einem visuell geführten Sensorsystem nach einem der vorhergehenden Ansprüche, bei dem zumindest einer der gültigen Einstellwerte in Schritt (d) in einem vorbestimmten Intervall innerhalb eines vorbestimmten Bereichs, der zumindest einen gültigen Einstellwert enthält, geändert wird.

5. Lerndaten-Einstellverfahren in einem visuell geführten Sensorsystem nach Anspruch 1,
bei dem die Lerndaten aus einer Vielzahl von Parametern zur Bildverarbeitung bestehen,
bei dem jeweilige gültige Einstellwerte der Vielzahl von Bildeinstellparametern in Schritt (b) bestimmt werden,
bei dem die Merkmalsdaten der Vielzahl von Musterbildern in Schritt (d) erfaßt werden, während jeder der Vielzahl von Bildverarbeitungsparameter geändert wird und die anderen Bildverarbeitungsparameter auf dem jeweiligen gültigen Einstellwert oder dem jeweiligen optimalen Wert gehalten werden und
bei dem ein Wert jedes der Bildverarbeitungsparameter, der ausreicht, um die Abweichung zu minimieren, selbsttätig als ein optimaler Wert jedes der Parameter in Schritt (d) eingestellt wird.

6. Lerndaten-Einstellverfahren in einem visuell geführten Sensorsystem nach Anspruch 5, bei dem ein optimaler Wert jedes der Bildverarbeitungsparameter, der ausreicht, um die Summe der Abweichungen zu minimieren, in Schritt (d) eingestellt wird.

7. Lerndaten-Einstellverfahren in einem visuell geführten Sensorsystem nach Anspruch 5 oder 6, bei dem jeder der Bildverarbeitungsparameter in Schritt (d) in einem vorbestimmten Intervall innerhalb eines vorbestimmten Bereichs, der den gültigen Einstellwert jedes der Parameter enthält, geändert wird.

## Revendications

1. Un procédé de réglage de données d'apprentissage dans un système de détection visuelle qui est employé pour commander la position de fonctionnement ainsi que l'orientation d'une section de fonctionnement (26) d'une machine en dépendance de la position d'un objet détecté par le système de détection visuelle, le procédé de réglage de données d'apprentissage comprenant, avant le fonctionnement de la section de fonctionnement (26) de la machine, les opérations consistant à :
(a) stocker un ensemble d'images échantillons (1 à N) de tels objets, ces objets étant suffisamment semblables l'un à l'autre de manière à pouvoir être définis par des éléments communs de données d'apprentissage (P1 à P6) ;
(b) déterminer des valeurs de réglage formelles (P10 à P60) desdites données d'apprentissage (P1 à P6) pour une image échantillon (1) dudit ensemble d'images échantillons (1 à N) ;
(c) détecter et régler des données de caractéristiques (C1 à CN) spécifiant une position de chaque image échantillon dudit ensemble d'images échantillons (1 à N), lesdites données de caractéristiques (C1 à CN) étant obtenues à partir de chaque image échantillon respective (1 à N) en utilisant les données d'apprentissage (P1 à P6) de ce dernier ; et
(d) employer lesdites données de caractéristiques réglées (C1 à CN) de chaque image échantillon dudit ensemble d'images échantillons (1 à N) dans un processus de détermination et de réglage automatique des valeurs optimales (P1(i)opt à P6(i) opt) desdites données d'apprentissage (P1 à P6), ces valeurs optimales étant prévues pour être utilisées dans un fonctionnement ultérieur de la section de fonctionnement (26) de la machine sous la commande du système de détection visuelle lorsqu'un objet de travail réel est détecté par le système de détection visuelle ; ledit processus de détermination automatique de valeurs optimales comprenant le fait de déterminer, comme valeur optimale (P1(i)opt à P6(i)opt) de chaque élément de données d'apprentissage (P1 à P6), la valeur de cette dernière qui minimise l'erreur entre les données de caractéristiques de spécification de position (C) correspondant à la valeur optimale et les données de caractéristiques de spécification de position (C1 à CN) de chaque image échantillon dudit ensemble d'images échantillons (1 à N), chaque valeur optimale (P1(i)opt à P6(i)opt) étant déterminée par un processus impliquant le fait de changer au moins l'une des valeurs de réglage formelle d'origine (P10 à P60).

2. Un procédé de réglage de données d'apprentissage dans un système de détection visuelle selon la revendication 1, dans lequel ledit ensemble d'images échantillons employé dans ladite opération (a) est pris à partir de nombreux objets et présente des variations dans au moins une de forme et de dimension.

3. Un procédé de réglage de données d'apprentissage dans un système de détection visuelle selon la revendication 1 ou 2, dans lequel des valeurs optimales desdites données d'apprentissage suffisantes pour minimiser la somme des erreurs sont réglées dans ladite opération (d).

4. Un procédé de réglage de données d'apprentissage dans un système de détection visuelle selon une quelconque revendication précédente, dans lequel au moins l'une des valeurs de réglage formelles est modifiée dans ladite opération (d) à un intervalle prédéterminé à l'intérieur d'une plage prédéterminée comprenant au moins cette valeur de réglage formelle.

5. Un procédé de réglage de données d'apprentissage dans un système de détection visuelle selon la revendication 1,
dans lequel lesdites données d'apprentissage sont composées d'un ensemble de paramètres pour un traitement d'images ;
dans lequel des valeurs de réglage formelles respectives dudit ensemble de paramètres de réglage d'images sont déterminées dans ladite opération (b) ;
dans lequel les données de caractéristiques dudit ensemble d'images échantillons sont détectées dans ladite opération (d) alors que chaque paramètre dudit ensemble de paramètres de traitement d'images est changé et que les autres paramètres de traitement d'images sont maintenus fixes à sa valeur de réglage formelle ou à sa valeur optimale ; et
dans lequel une valeur de chacun desdits paramètres de traitement d'image suffisante pour minimiser ladite erreur est réglée de manière automatique, en tant que valeur optimale de chacun desdits paramètres, dans ladite opération (d).

6. Un procédé de réglage de données d'apprentissage dans un système de détection visuelle selon la revendication 5, dans lequel une valeur optimale de chacun desdits paramètres de traitement d'images suffisante pour minimiser la somme des erreurs est réglée dans ladite opération (d).

7. Un procédé de réglage de données d'apprentissage dans un système de détection visuelle selon la revendication 5 ou 6, dans lequel chacun desdits paramètres de traitement d'images est changé dans ladite opération (d) à un intervalle prédéterminé à l'intérieur d'une plage prédéterminée comprenant la valeur de réglage formelle de chacun desdits paramètres.
